# EUROPEAN PATENT APPLICATION

(11) **EP 1 727 085 A1**
(43) Date of publication of application: **29.11.2006**
(21) Application number: 05021041.8
(22) Date of filing: 27.09.2005
(51) Int. Cl.: G06Q 20/00

(54) **Cellular telephone based payment apparatus and method for use in purchase of goods and services**

(30) Priority: 08.10.2004 US 617405 P
(71) Applicant: Randy Epps, Santa Maria CA 93455 (US)
(72) Inventor: Randy Epps, Santa Maria CA 93455 (US)
(74) Representative: Jehan, Robert

(57) **Abstract**

A cellular telephone is configured as a payment device for purchases from merchants, service providers and fast food establishments. The cellular device, in cooperation and interoperation with the cellular network and cellular service, providing a means for receiving credit authorization requests from merchants, reviewing the request, and approving or disapproving requests from the purchaser's cellular phone. The cellular telephone payment device and network having capabilities of replacing conventional credit cards and cash payments at time of purchase to merchants and service providers.

## Description

### CROSS REFERENCE TO RELATED APPLICATIONS

This application claims priority to co-pending United Stated Provisional Patent Application having Serial No. 60/617,405 filed October 8, 2004 entitled "Easy Pay By Cell", having a common applicant herewith.

### FIELD OF THE DISCLOSURE

This disclosure relates to a system providing for and enabling electronic payment for goods and services, and more particularly the present invention relates to electronic payment for goods and services by means of a networked electronic payment system implemented using cellular telephones, enabled by cellular service providers and offered as a service to cellular telephone service subscribers thereto.

### BACKGROUND

Cellular telephones are widely available to and used by consumers in today's economy. In today's fast paced society the cellular telephone provides an important and sometime primary means of communication and contact between family members, friends, business associates and clients. Cell phone are compact, fit easily in the palm of the hand, are unobtrusive, are easily carried and can be used most anywhere, due in great part to the major investments made over the past decade in national cellular network infrastructure. Cellular telephones have become an important personal communications tools in as much as today a substantial percentage of the population now carries a cellular telephone with them during the day, close at hand. The cellular telephone is a tool for many uses, and is an ideal platform on which to implement a novel and useful purchase payment tool, as to be discussed in this disclosure.

Today it is common to purchase goods and services from stores or merchants using some means of credit. Conventional means for a consumer to pay for purchases include credit and debit cards as issued by a bank or credit agency. What is presented herein is an alternate means of electronically purchasing goods and services, a means that is an alternative to the use of credit cards while is many instances replacing the need to carry credit cards, while providing increased security to the purchaser over the use of credit cards and reducing the risk of identity theft by concealing customer accounts, addressed, personal information and eliminating credit card slip signatures. This disclosure covers an inventive disclosure providing for a cellular based purchase payment apparatus having capabilities of replacing the use of credit cards and cash at the time of purchase.

### SUMMARY OF THE DISCLOSURE

Embodiments of the inventive disclosure made herein comprise an electronic payment system using a cellular telephone incorporating a secure electronic payment system including access passwords, transaction and approval menu, and authorization features of the present invention; and a cellular network enabling and supporting the electronic payment transaction, security features, authorization, and billing and payment features of the present invention. The inventive disclosures made herein provide a fast and easy means for consumers to pay for good and services electronically using a cellular telephone equipped with features of the present invention, the electronic payment disclosures herein also referred to as "easy pay by cell" in this application.

The inventive disclosures herein provides a fast, secure, and convenient means to pay for purchases using a cellular telephone, and provides a fast and easy alternate to the use of credit cards, debit cards, and currency. The system of the present invention comprises a merchant or supplier with a product or service offered for sale, a purchaser having a cellular telephone equipped with features of the present invention, a cellular network service provider for connecting and enabling the purchase through the purchaser's cell phone, and a credit or billing agency which may in many instances be the same entity as the cellular network service provider.

In one embodiment an electronic payment system using a cellular telephone comprises a cellular phone, or other cellular capable device such as a PDA, the cellular device supporting a user secure payment password and payment menu, and a cellular network offering and enabling a secure "easy pay by cell" service. The electronic payment system further comprises a billing agency capable of receiving and servicing a merchant's "easy pay by cell" payment authorization requests and approvals through a cellular network to the purchaser's cellular telephone, in accordance with the inventive disclosures herein. The billing agency may be the same entity as the cellular service provider to which the purchaser subscribes, or the cellular service provider may offer this service in cooperation with a separate entity such as a bank, credit union, a credit or debit card issuer. In one embodiment, the steps of the cellular based electronic payment system comprises:
a. The purchaser selects or orders goods or services from a merchant.
b. The purchaser informs the merchant that the payment will be by cell phone.
c. The purchaser provides the cell phone number or a ghost account number to the merchant.
d. The merchant handles the cell phone number for approval in a manner similar to what would be done for a credit card number, contacting a payment approval center or agency for authorization. The contact and transaction means can be similar to that provided by existing credit approval agencies including electronic approval from the agency to the merchant, or can be as simple as a dial in number to the billing agency that the merchant calls to request authorization.
e. The cellular network service provider or its billing agency receives the payment request transaction and attempts confirmation by sending a payment menu with authorization request to the purchaser's cell phone.
f. The purchaser enters a security password via the cell phone and reviews and approves the payment on the cell phone payment menu.
g. The merchant receives an approval response and the payment is debited or charged to the purchaser's cellular service account.
h. "easy pay by cell" purchases are itemized on the purchaser's periodic cellular service billing statement, or other periodic billing generated by the billing agency.

The payment menu may be designed as a feature packaged into new cellular telephones, and additionally may be retrofitted into current or new cellular telephones having memory and equipped to run downloadable applications, examples including JAVA applets. JAVA is a widely used application programming language developed by Sun Computer Corporation, a runtime environment version of which is implemented on current cellular devices. Loadable JAVA applets are supported on many currently marketed cellular telephone devices, JAVA runtime application examples including downloadable cellular games and messaging utilities. Such JAVA application download and runtime capabilities are widely available on many GSM phones from many manufacturers, providing for rapid and inexpensive deployment to an existing cellular phone subscriber base for a cellular service choosing to enable a "easy pay by cell" service offering. It is to be understood that applications or applets implementing the functionality of the present inventive disclosures on cellular telephones are not limited to the use of JAVA, but may be implemented using other application development means known to those skilled in the art, including C or C++ programming, assembly language, XML, HTML, various interpreted or tokenized languages and many other application development tools and languages not specifically discussed herein but known those skilled in the art.

Cellular phones implementing the "easy pay by cell" system will utilize widely accepted and deployed data exchange transmission standards. Many such standards are widely implemented in cellular networks and deployed to user cell phones, and are available as a data exchange base for implementation of the "easy pay by cell" system as disclosed in this application. Cellular phones based on the GSM or Global System for Mobile Communications standard employ an open voice and data exchange standard uses digital technology and time division multiple access transmission methods. Voice is digitally encoded via a unique encoder, which emulates the characteristics of human speech. GSM is an open wireless communications standard implemented internationally, and is claimed by the GSM standards organization to be the most secure public wireless standard in the world. A variety of GSM cellular devices, as well as GSM on a chip single chip cellular devices implement voice recognition technology. Voice recognition technology is the capability for cellular phones, PCs and other communications devices to be activated or controlled by voice commands. Voice recognition and voice control technology is particularly advantageous to the implementation of "easy pay by cell" as voice recognition control is an efficient way to create user interfaces suitable to "hands free" cellular use, thereby reducing the distractions and safety issues that can occur in searching for and depressing keypad buttons to make selections. Voice recognition and control is envisioned as an alternate to keypad data entry for inputting the payment menu password as well as issuing voice commands to approve or disapprove payment on the cellular device. Both keypad entry and voice recognition are applicable input means to the inventive disclosures presented herein.

In cellular technology General Packet Radio Service (GPRS) enabled networks offer 'always-on', higher capacity, Internet-based content and packet-based data services. GPRS enables services such as color Internet browsing, e-mail on the move, visual communications, multimedia messages and location-based services.

Initial cellular telephone GSM application development comprised applications running on the GSM SIM card using the SIM tool kit interfacing and using SMS or Short Messaging Service to communicate with the application infrastructure. SMS is appropriate for short byte count data packets, and can be one of several transmission packet communications schemes that can be applied for the "easy pay by cell" system. Cellular telephone SMS applications were followed by the introduction of browsers utilizing special mobile protocols (ex: WAP, HDML) and the basic data capabilities. The "easy pay by cell" service may be implemented in another form by using the WAP and HDML capabilities to support display and interaction with a WAP web page served through the cellular service provider and access on the cellular telephone. Such web pages would preferably be encrypted to safeguard account information. Cellular telephone based web browsing is commonly offered as an optional subscription fee service, and therefore implementing the "easy pay by cell" payment menu using WAP may be more costly to a cellular customer not already subscribing to cellular web access than would be the case by using a separate cell phone resident applet. The "easy pay by cell" electronic payment system may be implemented on a cell phone by use of loadable applets. Current cell phones often support loadable applets, for example JAVA applets provided through cellular services. Such applets provide a convenient foundation to implement a secure, encrypted, cellular phone payment menu system. Alternately, cellular telephones can be provided to the subscriber pre-configured and loaded with software to implement and support the wireless "easy pay by cell" payment functionality as described in this inventive disclosure. The cellular "easy pay by cell" electronic purchase payment system may be implemented by use of any of the cellular data exchange and application technologies discussed above, as well as other cellular phone technologies which are not discussed herein but are known to those skilled in the art.

In another embodiment an electronic purchase payment system comprises a cellular phone having an RFID chip and supporting a user secure payment password to enable the RFID chip. The RFID chip allows for the payment for purchased items using stored credit information. As envisioned, the RFID chip can be located preferably near the bottom along the back of the cellular phone, a location which positions the RFID chip for easy scanning by holding the phone near a RFID reader. The cellular phone RFID chip contains information required to initiate an electronic payment transaction, including purchaser name, and billing account number. The disclosed system is more secure than a credit card, in that the user must enter a security password into the cell phone to enable the RFID chip. The security password is changeable by the user. Once the cell phone user has enabled the RFID chip with the password, the cell phone may be scanned over a RFID reader device that collects the necessary information to complete the electronic "easy pay by cell" purchase.

Accordingly, it is a principal object of the inventive disclosures made herein to provide a novel and useful alternative to the conventional approaches to paying for purchased good as services. Specifically, the cellular telephone based electronic payment system incorporating a secure electronic payment system including access passwords, transaction and approval menu, and authorization features, in accordance with embodiments of the disclosures made herein utilize a totally electronic, cashless, cellular network enabled debit or credit payment system which is ideal for use in consumer purchases such as, for example, fast food drive through lane purchases. Such electronic cellular telephone based payment systems are ideal for use in purchase of goods and services from stores, merchants, auto service garages, highway toll booths, and in an almost endless number of other day to day situations requiring payment.

It is another object of the inventive disclosures made herein to provide a more secure payment system than is provided by the use of conventional credit and debit cards. Credit cards or credit card numbers can be stolen or obtained from signed credit card signature slips carbons discarded by merchants. The credit card number together with the address, name and signature provide a complete means for the fraudulent use by unscrupulous persons of a victim's credit card account to make fraudulent purchases. The cellular telephone based electronic payment system in accordance with the inventive disclosures herein eliminates the use of humanly readable credit cards and credit payment slips. The cellular telephone electronic payment requires the cell phone user to know and enter a secret, user changeable authorization password before the electronic "easy pay by cell" transaction can be completed and the charged against the user's account by the billing agency.

It is yet another objective of the inventive disclosures made herein to speed up the payment process at fast food restaurants and other establishments. Use of the cellular phone payment system disclosed herein benefits the customer by permitting the customer to pay for purchases without carrying a credit card or currency, and provide a quicker transaction completion time then the credit cards slip and signature method.

It is yet another objective of the inventive disclosures herein to provide a convenient electronic payment system in which transactions are itemized and recorded, and through the use of authentication menus and user security passwords transaction errors can be avoided.

It is another object of the inventive disclosures herein to provide a cellular phone based wireless payment system that can be configured to additionally support existing cellular telephones supporting loadable applications by way of an application download from a cellular service offering the "easy pay by cell" subscription service. This downloadable application allowing these phones to be upgraded for use in a "easy pay by cell" wireless payment system without the need to replace such cellular phones that support loadable applet capabilities.

These and other objects of the inventive disclosures made herein will become readily apparent upon further review of the following specification and associated drawings.

### BRIEF DESCRIPTION OF THE DRAWINGS

The drawings show a form of the invention that is presently preferred, however the invention is not limited to the precise arrangement shown in the drawings.
FIG. 1A and FIG. 1B present a flow chart of the cellular telephone based electronic wireless purchase payment system in accordance with an embodiment of the inventive disclosures made herein.
FIG. 2 is an isometric view of a cellular telephone including features of the inventive disclosures made herein.
FIG.3 is a view of the back side of a cellular telephone, of the folding flip phone type, with the phone in the open position, and identify the location of the RFID chip as discussed in the inventive disclosures made herein. This inventive disclosure is not limited to application with flip type phones, not limited to use with only cellular phones, but may be applied to use with all cellular enabled devices further including PDAs, computers, etc.

### DETAILED DESCRIPTION OF THE DRAWINGS

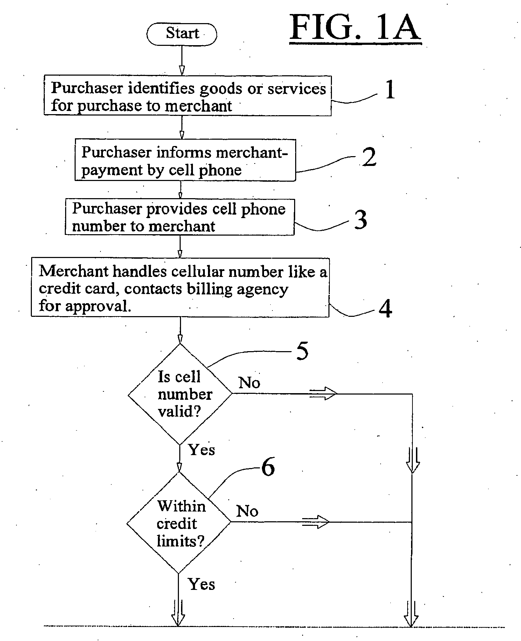

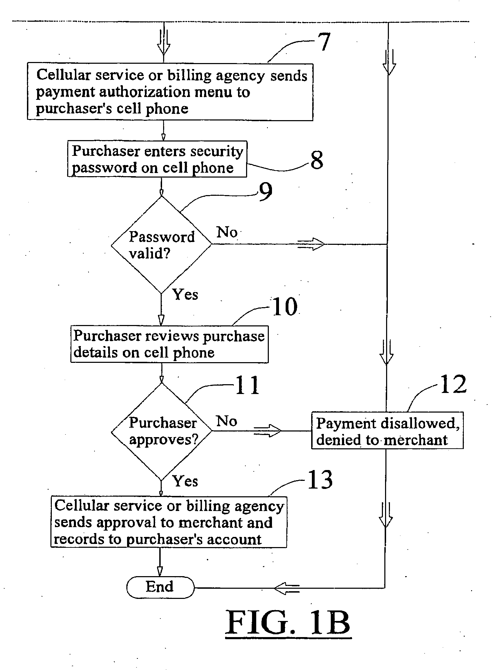

FIG. 1A and FIG. 1B presents a flow chart of selected major steps in the use of the cellular phone based credit purchase system in one embodiment of the inventive disclosures made herein. A purchaser equipped with a cellular telephone having features of the present invention and subscribed to a cellular service enabling the "easy pay by cell" features in accordance with this disclosure identifies goods and/ or services to be purchased 1 using the cellular telephone "easy pay by cell" system. Examples of where this purchase transaction might occur are purchase transactions in a fast food restaurant drive through lane, at a service provider such a dry cleaner, during the purchase of goods from a retail store or gasoline station, and many others. The purchaser communicates to the merchant that the payment will be by cell phone 2, this could by a self service selection on a merchant terminal such as a button or menu selection on a service station gas pump, or by communicating to a merchant, say at a drive through window of a fast food restaurant, that the purchase is charged to a cell phone. The purchaser provides the cellular number to the merchant, either by direct verbal communication, by entering on a keypad, or other means. As an alternate method instead of the use of a cellular telephone number, the purchasers may enter a special cellular service provider assigned number, herein called a ghost account number. The ghost account number option allows a cell phone subscriber to maintain the privacy of their cell number, making it unavailable to the merchant. The cellular service or agency would cross-reference or index the ghost account number to the purchaser's cellular phone number to process the transaction, and thereby maintain the privacy of the purchaser's cell phone number.

In a "easy pay by cell" transaction the merchant handles the transaction is a similar fashion to a credit card purchase. The cellular phone number or ghost account number is processed instead of the credit card number 4. The purchase authorization may occur through existing credit authorization services, or directly through the cellular service agency, or a billing agency the cellular service would cooperate and interoperate with to offer this service to its cellular subscribers. The cellular service or agency make an initial check on the received cellular number 5 or ghost account number to confirm that the number is valid, that the number is subscribed to the "easy pay by cell" service. If the number is invalid, remaining steps are skipped and a payment denial is returned to the merchant.

Another check may be made by the cellular service or its billing agency 6 to verify that the purchase and outstanding credit balance is within the credit limits of the account. Again, if the purchase exceeds credit limits a payment disapproved message is sent to the merchant and the process terminates.

If the purchase approval transaction passes checks in steps 5 and 6, the cellular provider or the billing agency sends a payment menu 7 to the purchaser's cellular telephone. The payment menu sent to the purchaser's cell phone may comprise, among other things, the merchant's name, address, and payment amount. The purchaser is required to enter security pass code or pass word on the cellular telephone before the cell phone will allow the payment to be approved by the purchaser. Input to the cellular phone can be via the keypad, or alternately via verbal commands interpreted using voice recognition technology, as discussed earlier. The password can be required before the payment menu is displayed, or alternately the password may be required after the payment menu is displayed buy before allowing the purchaser to authorize the purchase. In either case, the purchase is not be approved through the cell phone without the purchaser first entering a valid password and having the password validated through the cell phone or cellular system. The password is entered on the device keypad, or alternately may be entered using verbally using the voice recognition technology within the cellular telephone. Once the password is entered, it is checked for validity 9. If the password is invalid, the purchase authorization is denied and the denial is sent to the merchant. Not specifically shown on the flow chart but to be understood to be present is a password re-try scheme. It is intended that the purchaser, on entering an invalid password, may have the ability to retry a small fixed number of attempts to correctly enter the password, say for example 3 retries. This makes the system more user friendly and better able to handle user data input errors, thereby avoiding having to restart the purchase transaction steps from 1.

If the purchaser's password is validated 9, then the purchaser may review the payment menu 10 having the merchant, purchase amount among other things. If the purchaser is satisfied, the purchaser may approve the purchase, or if not satisfied the purchaser may disapprove the purchase. The approval or disapproval may be entered into the cellular device via the keypad, or may alternately be entered verbally using voice recognition and control technology integrated in the cellular device. In the case of a disapproved purchase, a payment disallowed 12 transaction or message is returned to the merchant. If the payment is approved, the cellular service 13 sends an approval message or transaction to the merchant and the transaction is recorded to the purchaser's account with the cellular service provider.

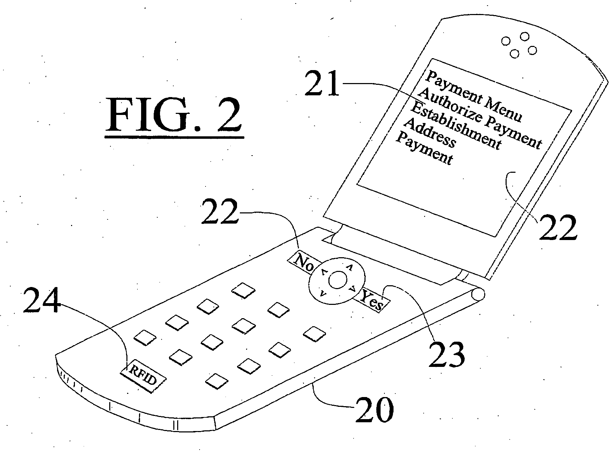

FIG. 2 depicts a cellular telephone incorporating features of the inventive disclosures made herein. Cellular telephone 20 incorporates "easy pay by cell" software components developed using JAVA, C, C++, XML, HTML or other well known application develop languages built upon SMS, GSM and other networking communications standards to implement the "easy pay by cell" functionality as discussed in detail earlier under FIG. 1 and in detail prior in the summary of the disclosure. The cellular telephone 20 provides for the display of received payment authorization information on payment menu 21, shown displayed on cell phone cover screen 22. Cellular telephone 1 incorporates "No" 22 and "Yes" 23 selector button utilized by the purchaser to authorize or not authorize a credit payment displayed on payment menu screen. The presence of the Yes and No buttons, as well as their size, location and form may deviate from the embodiment shown. Other implementations are readily achieved, including but not limited to implementing the "Yes" and "No" responses as second functions on existing keyboard keys, or implementing the responses using keypad number keys with the numbers indicated on the payment menu, for example 1 = Yes, 0 = No, or alternately voice commands as discussed earlier. Other payment authorization selection arrangements are readily envisioned and are included within the scope of this disclosure.

FIG. 2 further includes an additional embodiment of the electronic "easy pay by cell" purchase system. An RFID button 24 used by the purchaser to enable the RFID chip contained within the cellular phone. The cellular telephone supports a user secure payment password to enable the RFID chip. The RFID chip allows for the payment for purchased items using stored credit information read through the RFID chip, when enabled. As envisioned, the RFID chip can be located preferably near the bottom along the back of the cellular phone, a location which positions the RFID chip for easy scanning by holding the phone near a RFID reader. The cellular phone RFID chip contains information required to initiate an electronic payment transaction, including purchaser name, and billing account number. The disclosed system is more secure than a credit card, in that the user must enter a security password into the cell phone to enable the RFID chip. The security password is changeable by the user. Once the cell phone user has enabled the RFID chip with the password, the cell phone may be scanned over a RFID reader device that collects the necessary information to complete the electronic "easy pay by cell" purchase. The presence of the RFID chip is not required to implement the "easy pay by cell" functionality, as discussed in detail under FIG. 1 and in the summary of the disclosure. The use of the RFID chip provides an additional means of implementing "easy pay by cell" by providing a mechanism to quickly transfer purchaser's stored credit information during a purchase transaction.

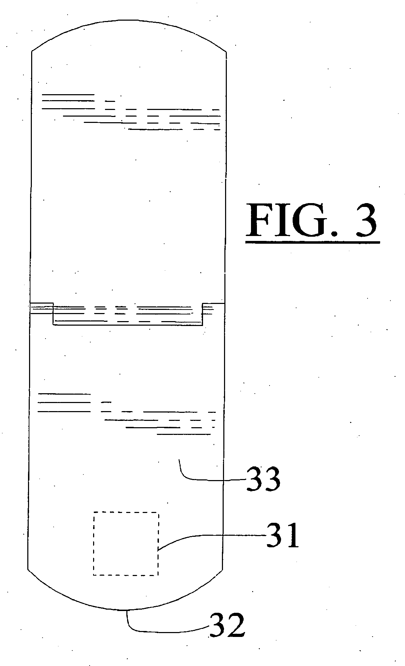

Referring now to FIG.3, the cellular telephone assembly of FIG.2 is viewed in an open position from its backside, or exterior case side. Dotted rectangle 31 outlines a preferred location for the "easy pay by cell" RFID chip as presented in this inventive disclosure. The RFID chip is envisioned as preferably located towards the bottom side 32 of the back 33 or the cellular phone, a location from which the RFID chip may be easily brought near and passed over a RFID reader or scanner.

In the preceding detailed description, reference has been made to the accompanying drawings that form a part hereof, and in which are shown by way of illustration specific embodiments in which the invention may be practiced. These embodiments and certain variants thereof, have been described in sufficient detail to enable those skilled in the art to practice the invention. It is to be understood that other suitable embodiments may be utilized and that logical, material, mechanical and electrical changes may be made without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A wireless cellular network payment apparatus equipped for receiving, display of credit purchase transaction and for approval or disapproval of the transaction, the apparatus comprising:
a wireless cellular network communications device having:
a keypad;
an alpha-numeric capable display;
a network data exchange protocol supporting data exchange between the cellular device and a cellular network service provider;
a processing means to receive, process and respond to the purchase transaction using the data exchange protocol;
a means to display a payment menu for purchaser approval of a received payment authorization request transaction;
a means for a purchaser to approve or disapprove the displayed payment authorization request transaction; and
a user modifiable security password for enabling authorization of a payment authorization request transaction.

2. The apparatus of claim 1, wherein the processing means is an application program developed for and executing upon the cellular device.

3. The apparatus of claim 2, wherein the cellular device is a cellular telephone.

4. The apparatus of claim 2 further comprising a RFID chip adapted to communicate purchaser's credit account information to a merchant through near range radio frequency communication between a merchant's RFID scanner and the RFID chip.

5. The apparatus of claim 4 further comprising a purchaser operable means on the cellular device for enabling and disabling the communication function of the RFID chip.

6. The apparatus of claim 2, wherein the cellular network service provider further comprises:
a billing agency having:
a server adapted to receive purchase payment authorization request transactions from one or more of merchants;
a means for generating a payment menu transaction;
a means for sending the payment menu transaction through cellular network to the purchaser's cellular device;
a means for receiving a payment authorization approval transaction response from the purchaser's cellular device over the cellular network;
a means for responding to the merchant's purchase payment request transaction with an approval or disapproval transaction to the merchant; and
a means of accumulating purchase charges or billing the purchaser.

7. The apparatus of claim 3, wherein the processing means to receive and process purchase approval transactions on the cellular device comprises a cellular payment software application executing on the cellular device.

8. The apparatus of claim 3, wherein the processing means to receive and process purchase approval transactions on the cellular device comprises a cellular network downloadable cellular payment JAVA runtime applet loaded to and executing on the cellular device.

9. The apparatus of claim 1, wherein the cellular device is a cellular telephone; and wherein the processing means to receive and process purchase approval transactions on the cellular device comprises a web browser executing on the cellular device communicating with a billing agency web server, said server providing web pages to the cellular device and said server equipped to process payment approval responses from the cellular device web browser.

10. The apparatus of claim 3, wherein the security password and payment approval input is provided to the cellular device verbally and the input is recognized using voice recognition.

11. The apparatus of claim 3, wherein the security password and payment approval input is provided to the cellular device using the cellular device keypad.

12. A method of using a cellular phone as a universal payment device, the method comprising:
selecting merchandise to be purchased;
informing a merchant that payment will be transacted by cellular telephone;
providing cellular identification data to the merchant;
sending an electronic payment authorization transaction initiated by the merchant using the cellular telephone identification provided;
receiving a request for payment authorization transaction at a cellular network service;
sending a payment authorization menu screen transaction from the cellular network service to the purchaser's cell phone over the cellular network;
authorizing payment by the purchaser entering a secret password on the cell phone, reviewing the merchant information and purchase amount on the payment menu, and authorizing payment on the cellular phone;
receiving the payment approved transaction at the cellular service provider over the cellular network;
transmitting the payment approval information by transaction to the initiating merchant; and
charging the payment to the purchaser's cellular service account.

13. The method of using a cellular telephone as a universal payment device of claim 12, wherein the cellular identification data is a cellular telephone number.

14. The method of using a cellular telephone as a universal payment device of claim 12, wherein the cellular identification data is a ghost ID number.

15. The method of using a cellular telephone as a universal payment device of claim 12 wherein the cellular identification data consists of purchaser account information contained on a RFID chip in the cellular phone, and the providing step further comprises reading the RFID account information data using a RFID scanning device.
